# EUROPÄISCHE PATENTSCHRIFT

(11) **EP 3 047 760 B1**
(45) Veröffentlichungstag und Bekanntmachung des Hinweises auf die Patenterteilung: **09.01.2019**
(21) Anmeldenummer: 15201500.4
(22) Anmeldetag: 21.12.2015
(51) Int. Cl.: A47C 27/14

(54) **VERFAHREN ZUR HERSTELLUNG EINES KÖRPERSTÜTZENDEN ELEMENTS**
METHOD FOR PRODUCING A BODY-SUPPORTING ELEMENT
PROCEDE DE FABRICATION D'UN ELEMENT DE SUPPORT CORPOREL

(30) Priorität: 21.01.2015 DE 102015100816
(43) Veröffentlichungstag der Anmeldung: 27.07.2016
(73) Patentinhaber: Maier, Sven Oliver, 73087 Bad Boll (DE)
(72) Erfinder: Maier, Sven Oliver, 73087 Bad Boll (DE)
(74) Vertreter: Ruckh, Rainer Gerhard

(56) Entgegenhaltungen:
- WO-A1-00/29202
- WO-A2-2014/014977
- US-A1- 2014 318 550
- Sebastian Pop: "3D Printed Cushioning Material Has Programmable Properties", , 23 August 2014 (2014-08-23), page 1, XP055377798, Retrieved from the Internet: URL:http://news.softpedia.com/news/3D-Prin ted-Cushioning-Material-Has-Programmable-P roperties-456103.shtml [retrieved on 2017-06-01]
- Drew Fustini: "mattress 3d-printing", , 12 July 2013 (2013-07-12), page 1, XP054977408, Retrieved from the Internet: URL:https://www.youtube.com/watch?v=JSarmm WkUZA [retrieved on 2017-06-01]

## Beschreibung

Die Erfindung betrifft ein Verfahren zur Herstellung eines körperstützenden Elements in Form einer Matratze.

Derartige Matratzen bestehen typischerweise aus Schaumstoffmaterialien, wobei insbesondere die Matratzen aus mehreren übereinanderliegenden Schaumstoffschichten bestehen können. Um den Liegekomfort derartiger Matratzen zu erhöhen, ist es üblich, sogenannte Zonierungen in Matratzen vorzunehmen. Bei einer derartigen Zonierung werden über die Fläche der Matratze verteilt Zonen mit unterschiedlichen elastischen Eigenschaften, das heißt unterschiedlicher Nachgiebigkeit gebildet. Hierbei wird dem Umstand Rechnung getragen, dass eine Matratze beispielsweise im Beinbereich eine andere Nachgiebigkeit aufweisen soll als im Rückenbereich. Zur Ausbildung derartiger Zonierungen in mehrschichtigen Matratzen werden typischerweise in eine mittlere Matratzen-Schicht mit oszillierenden Messern lokal Hohlräume eingearbeitet. Auf die Ober- und Unterseite dieser mittleren Matratzen-Schicht wird dann eine jeweils vollständig geschlossene obere und untere Matratzen-Schicht aufgebracht.

Ein erster Nachteil derartiger Zonierungen besteht darin, dass durch das Einschneiden der Hohlräume in die Matratzenschicht in erheblichem Maße Ausschussmaterial anfällt, das für eine weitere Matratzenherstellung nicht verwendbar ist.

Ein weiterer Nachteil besteht darin, dass die Geometrien der mit den oszillierenden Messern generierten Hohlräume nur in beschränktem Maß vorgegeben werden können. So müssen, da die oszillierenden Messer von außen in die Matratzenschicht eingeführt werden, zwangsläufig die damit generierten Hohlräume an der Oberfläche der Matratzenschicht ausmünden. Weiterhin ist durch die Größe der oszillierenden Messer die Größe der mit diesen generierbaren Hohlräume begrenzt, so dass die Ortsauflösung der Variation der Nachgiebigkeit der Matratze begrenzt ist.

Die WO 2014/014977 A2 betrifft ein Verfahren zur Herstellung von medizinischen Geräten, insbesondere orthotischen Geräten. Die Geräte werden, angepasst an eine bestimmte Person, mittels eines 3D-Druckers hergestellt.

In US 2014/0318550 A1 sind Rehabilitationseinrichtungen beschrieben, die körperstützende Elemente aufweisen können.

In WO 00/29202 A1 sind computergesteuerte Fertigungsmethoden zur Herstellung von medizinischen Einrichtungen beschrieben.

In "Mattress 2, CGTrader.com (03. November 2013)" ist ein mittels eines 3D-Druckers hergestelltes Modell einer Matratze beschrieben.

In "Now you can 3D Print with Memory Foam, 3D Printing Industry (08. Oktober 2014)" sind aus Filamenten bestehende, mit 3D Druckern hergestellte Materialien beschrieben, die unter Feuchtigkeitseinwirkung viskoelastisch werden.

In "3D printing industry poised for extraordinary growth, 3D Printer (24. September 2012)" ist ausgeführt, eine Matratze aus Plastik mittels eines 3D-Druckers herzustellen.

In "Sebastian Pop: 3D Printed Cushioning Material Has Programmable Properties", 23. August 2014 (2014-08-23), Seite 1, XP055377798", ist die Herstellung eines kissenartigen Materials durch ein 3D-Druckverfahren beschrieben. Drew Fustini: "mattress 3d-printing", 12. Juli 2013 (2013-07-12), Seite 1 XP054977408, zeigt eine mit einem 3D-Druckverfahren hergestellte dreidimensionale Stützstruktur.

Der Erfindung liegt die Aufgabe zugrunde, ein rationelles Verfahren bereitzustellen, mittels dessen an individuelle Bedürfnisse exakt angepasste körperstützende Elemente hergestellt werden können.

Zur Lösung dieser Aufgabe sind die Merkmale des unabhängigen Anspruches vorgesehen. Vorteilhafte Ausführungsformen und zweckmäßige Weiterbildungen der Erfindung sind in den abhängigen Ansprüchen beschrieben.

Die Erfindung betrifft ein Verfahren zur Herstellung eines körperstützenden Elements in Form einer Matratze umfassend folgende Verfahrensschritte
- Vorgabe von Druckdaten, welche eine personenspezifische dreidimensionale Stützstruktur bilden, wobei die Druckdaten von dreidimensionalen Geometriedaten mit ortsabhängigen Sollwerten für die Elastizität des herzustellenden körperstützenden Elements gebildet sind.
- Herstellung des körperstützenden Elements anhand der Druckdaten mittels eines 3D-Druckers.

Das mit dem erfindungsgemäßen Verfahren hergestellte körperstützende Element ist generell von einem zumindest teilweise elastische Eigenschaften aufweisenden Gegenstand gebildet, der eine Anlagefläche oder Auflagefläche aufweist, die zur Anlage oder Auflage für Körperteile einer Person ausgebildet ist. Erfindungsgemäß ist das körperstützende Element von einer Matratze gebildet. Das körperstützende Element kann dabei von einem Protheseneinsatz, einem Armpolster oder dergleichen gebildet sein. Weiterhin kann das körperstützende Element als Kissen, insbesondere Kopfkissen oder Sitzkissen ausgebildet sein. Weiterhin kann das körperstützende Element als Sitz, beispielsweise Autositz oder Element eines solchen ausgebildet sein. Schließlich kann das körperstützende Element auch als Matratze ausgebildet sein. Das erfindungsgemäße körperstützende Element kann somit im medizinischen Bereich oder auch im industriellen Bereich und im Haushaltsbereich eingesetzt werden.

Ein wesentlicher Aspekt des erfindungsgemäßen Verfahrens besteht darin, dass mit diesem das jeweilige körperstützende Element individuell und exakt an die jeweiligen Bedürfnisse und Anforderungen der Person, die das körperstützende Element nutzen möchte, angepasst werden kann.

Die individuelle Anpassung des körperstützenden Elements an die Anforderungen der jeweiligen Person erfolgt allgemein durch die Vorgabe von Druckdaten in Form einer dreidimensionalen Stützstruktur. Diese Stützstruktur wird allgemein anhand von Messungen gewonnen, mittels derer das für die jeweilige Person zugeschnittene Anforderungsprofil des körperstützenden Elements ermittelt wird. Insbesondere kann das ortsaufgelöste Belastungsprofil für das körperstützende Element ermittelt werden. Die Druckdaten sind von dreidimensionalen Geometriedaten mit ortsabhängigen Sollwerten für die Elastizität des herzustellenden körperstützenden Elements gebildet.

Durch die Vorgabe derartiger Sollwerte werden die Bedürfnisse und Anforderungen der Person, die das körperstützende Element nutzen möchte, exakt und ortsaufgelöst abgebildet.

Anhand der so gebildeten Druckdaten kann dann das körperstützende Element exakt den Bedürfnissen der Person entsprechend mit dem 3D-Drucker hergestellt werden. Allgemein wird das körperstützende Element in Abhängigkeit der Druckdaten so gefertigt, dass es ein ortsabhängiges Nachgiebigkeits- beziehungsweise Elastizitätsprofil aufweist, welches dem in den Druckdaten hinterlegten Belastungsprofil entspricht. Hierzu können insbesondere mittels des 3D-Druckers in Abhängigkeit der Druckdaten Bereiche unterschiedlicher Elastizität des körperstützenden Elements durch die Bildung von Hohlräumen unterschiedlicher Größen und/oder unterschiedlicher Anzahl erzeugt werden.

Alternativ oder zusätzlich werden mittels des 3D-Druckers in Abhängigkeit der Druckdaten Bereiche unterschiedlicher Elastizität des körperstützenden Elements durch die Verwendung unterschiedlicher Druckmaterialien erzeugt.

Vorteilhaft hierbei ist, dass die Formen und Größen der Hohlräume, die mit dem 3D-Drucker hergestellt werden, frei vorgebbar sind, wobei insbesondere auch sehr kleine, allseitig mit Material umgebene Hohlräume erzeugt werden können. Weiterhin können auch die Bereiche bestehend aus Materialien unterschiedlicher Elastizität in beliebigen Formen und auch in sehr kleinen Größen erzeugt werden. Damit kann eine hohe Ortsauflösung des Nachgiebigkeitsprofils des körperstützenden Elements erzeugt werden, so dass das Anforderungsprofil, welches durch die Druckdaten definiert ist, exakt umgesetzt werden kann.

Zur Herstellung des körperstützenden Elements können allgemein 3D-Druckverfahren unterschiedlicher Ausprägungen eingesetzt werden. Hierzu gehören das selektive Laserschmelzen, das selektive Elektronenstrahlschmelzen, das selektive Lasersintern, Stereolithographieverfahren, das Digital Light Processing, das Polyjet-Modelling sowie das Fused Deposition Modelling.

Besonders vorteilhaft werden zur Herstellung des körperstützenden Elements elastische Materialien verwendet, die insbesondere bei dem mittels des 3D-Druckers durchgeführten Druckprozess mit einem Bindemittel vermischt werden.

Insbesondere werden als elastische Materialien elastomere Materialien, insbesondere Kunststoffe, verwendet.

Gemäß einer vorteilhaften Ausgestaltung der Erfindung weist der 3D-Drucker Sprühmittel auf, wobei aus ersten Sprühmitteln elastische Materialien gesprüht werden und aus zweiten Sprühmitteln Bindemittel gesprüht werden.

Dabei liegen die elastischen Materialien in Pulverform und das Bindemittel in flüssiger Form vor.

Der so ausgebildete 3D-Drucker kann dann so betrieben werden, dass das ein elastisches Material fördernde Sprühmittel ständig aktiv wird. Das Sprühmittel, welches das Bindemittel fördert, ist dagegen nur aktiv, wenn mit dem 3D-Drucker eine Materialstruktur erzeugt werden soll, so dass sich das Bindemittel mit dem elastischen Material verbindet und so die Materialstruktur bildet. Zur Generierung eines Hohlraums wird zwar über das erste Sprühmittel elastomeres Material gesprüht, jedoch kein Bindemittel über das zweite Sprühmittel.

Der 3D-Drucker kann vorteilhaft derart weitergebildet sein, dass mit dem 3D-Drucker simultan Materialstrukturen des körperstützenden Elements aus unterschiedlichen elastomeren Materialien gebildet werden.

Die Erfindung wird im Folgenden anhand der Zeichnungen erläutert. Es zeigen:
- Figur 1:: Schematische Darstellung einer Vorrichtung mit einem 3D-Drucker zur Herstellung eines körperstützenden Elements.
- Figur 2:: Erste Teildarstellung von Strukturen des körperstützenden Elements gemäß Figur 1.
- Figur 3.: Zweite Teildarstellung von Strukturen des körperstützenden Elements gemäß Figur 1.

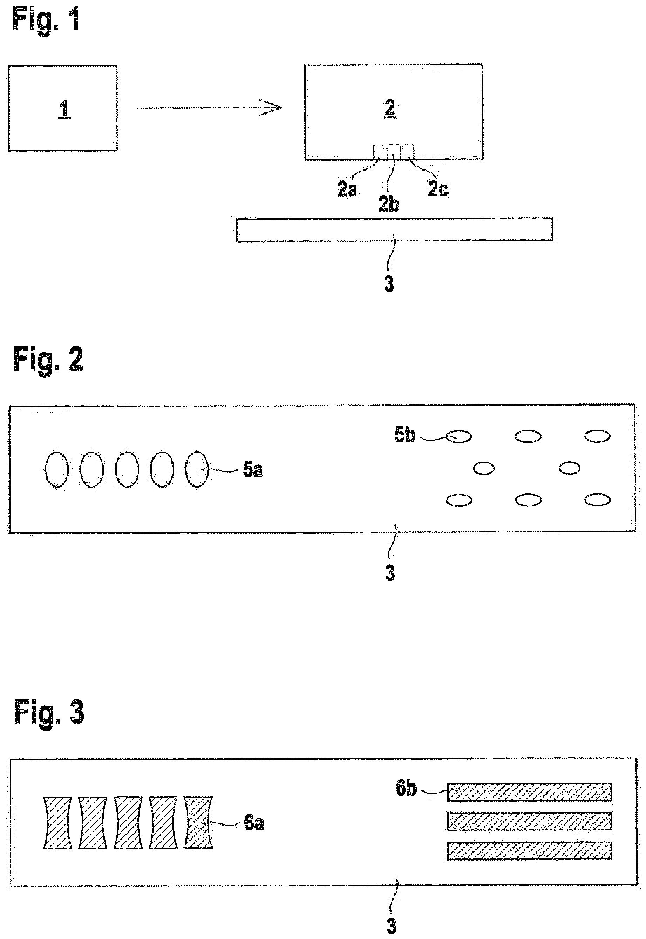

Figur 1 zeigt schematisch eine Vorrichtung mit einer Rechnereinheit 1 und einem 3D-Drucker 2 zur Herstellung eines körperstützenden Elements, welches im vorliegenden Fall von einer Matratze 3 gebildet ist.

Die mit der Vorrichtung herzustellende Matratze 3 soll exakt und individuell an die Bedürfnisse einer Person, die die Matratze 3 nutzen möchte, angepasst sein. Hierzu werden anhand von Messungen die individuellen Bedürfnisse und Anforderungen an die Beschaffenheit der Matratze 3 ermittelt. Die Ergebnisse der Messungen werden in der Rechnereinheit 1 in eine dreidimensionale Stützstruktur, im vorliegenden Fall in eine dreidimensionale Liegestruktur, umgesetzt. Diese Stützstruktur bilden Druckdaten, die vorteilhaft in der Rechnereinheit 1 als CAD-Daten vorliegen und in CAM-Daten gewandelt werden, die von dem 3D-Drucker 2 als Eingangsgrößen verarbeitet werden können.

Die Liegestruktur ist vorteilhaft von einem dreidimensionalen, ortsabhängigen Raster von Sollwerten für die Elastizität, das heißt Nachgiebigkeit der herzustellenden Matratze 3 gebildet.

Entsprechend den Vorgaben dieser Druckdaten wird dann mit dem 3D-Drucker 2 die Matratze 3 mit entsprechend variierenden elastischen Eigenschaften erzeugt.

Als Komponenten zur Herstellung der Matratze 3 werden einerseits elastische Materialien in Form von elastomeren Materialien, insbesondere Kunststoffen, und andererseits Bindemittel verwendet. Die elastomeren Materialien liegen im 3D-Drucker 2 in Pulverform vor. Das Bindemittel liegt vorteilhaft in flüssiger Form vor.

Zum Austrag dieser Materialien weist der 3D-Drucker 2 Sprühmittel 2a, 2b, 2c auf, die in Form von Düsen oder dergleichen ausgebildet sein können. Zur Herstellung der Matratze 3 erfolgt mit den Sprühmitteln 2a, 2b, 2c ein schichtweiser Materialauftrag, wodurch die Matratze 3 schichtweise aufgebaut wird.

Zur Ausbildung einer Materialstruktur wird simultan über ein erstes Sprühmittel 2a pulverförmiges elastomeres Material und über ein zweites Sprühmittel 2b flüssiges Bindemittel ausgetragen, wobei sich diese Substanzen am Ort des Austrags verbinden und so lokal eine Materialstruktur ausbilden.

Um eine räumliche Variation der Elastizität der Matratze 3 zu erhalten, können in dem 3D-Drucker 2 gezielt an bestimmten Orten der Matratze 3 Hohlräume 5a, 5b eingearbeitet werden, wobei in Figur 2 schematisch Beispiele derartiger Hohlräume 5a, 5b dargestellt sind. Ein Hohlraum 5a, 5b an einem bestimmten Ort wird dadurch generiert, indem über die zweite Sprühmittel 2b kein Bindemittel ausgesprüht wird, so dass sich das über das erste Sprühmittel 2a ausgesprühte elastomere Material dort nicht mit dem Bindemittel zu einer Materialstruktur verbinden kann. Alternativ kann auch über das erste Sprühmittel 2a kein elastomeres Material ausgesprüht werden, so dass kein Ausschuss an pulverförmigem elastomeren Material entsteht.

Die mit dem 3D-Drucker 2 generierten Hohlräume 5a, 5b können beliebig gestaltete Geometrien aufweisen, wobei diese insbesondere in Form von Einschlüssen ausgebildet sein können, die allseitig von der Materialstruktur der Matratze 3 umgeben sein können. Weiterhin können die Hohlräume 5a, 5b in unterschiedlichen Größen erzeugt werden, wobei insbesondere auch sehr kleine Hohlräume 5a, 5b erzeugt werden können, wodurch eine besonders hohe Ortsauflösung der Variation der elastischen Eigenschaften der Matratze 3 erzielt werden kann.

Figur 2 zeigt einen Ausschnitt der mit dem 3D-Drucker 2 gemäß Figur 1 hergestellten Matratze 3 in einer prinzipiellen, nicht maßstäblichen Darstellung. Der linke Bereich des Ausschnitts der Matratze 3 enthält eine Linearanordnung von ellipsoidförmigen Hohlräumen 5a und ist damit nachgiebiger als der mittlere Bereich des Ausschnitts der Matratze 3 der keine Hohlräume 5a, 5b aufweist. Der rechte Bereich des Ausschnitts der Matratze 3 enthält eine Mehrfachanordnung von versetzt übereinander angeordneten scheibenförmigen Hohlräumen 5b, wobei auch dieser Bereich nachgiebiger ist als der mittlere Bereich des Ausschnitts ohne Hohlräume 5a, 5b. Durch geeignete Vorgaben der Größen und Geometrien der Hohlräume 5a, 5b können die elastischen Eigenschaften nahezu stufenlos variiert werden.

Um eine räumliche Variation der Elastizität der Matratze 3 zu erzielen, können mit dem 3D-Drucker 2 auch lokal Bereiche 6a, 6b bestehend aus unterschiedlichen Materialien erzeugt werden (Figur 3). Im vorliegenden Fall weist hierzu der Drucker neben dem ersten Sprühmittel 2a, mit dem ein erstes elastomeres Material ausgetragen und mit dem von dem Sprühmittel 2b ausgetragenen Bindemittel zu ersten Materialstrukturen verbunden werden kann, ein weiteres Sprühmittel 2c auf. Mit diesem weiteren Sprühmittel 2c wird ein vom elastomeren Material des ersten Sprühmittels 2a verschiedenes elastomeres Material ausgetragen, das ebenfalls mit dem Bindemittel aus dem Sprühmittel 2b zu einer ersten Materialstruktur verbunden werden kann, deren Elastizität sich von der Elastizität der zweiten Materialstruktur unterscheidet. Mit dem so ausgebildeten 3D-Drucker 2 können somit simultan, das heißt in einem Fertigungsprozess, zwei unterschiedliche Materialstrukturen unterschiedlicher Elastizität erzeugt werden. Generell kann der 3D-Drucker 2 in seiner Funktion auch derart erweitert sein, dass mit diesem mehr als zwei unterschiedliche Materialstrukturen erzeugt werden können.

Figur 3 zeigt einen Ausschnitt der mit den 3D-Druckern 2 hergestellten Matratze 3 in einer prinzipiellen, nicht maßstäblichen Darstellung. Der Grundkörper dieses Ausschnitts ist aus dem ersten elastomeren Material, das über das erste Sprühmittel 2a ausgegeben wird, und dem Bindemittel gebildet. In diesem Grundkörper sind lokale Bereiche 6a, 6b, bestehend aus einem zweiten elastomeren Material, das über das weitere Sprühmittel 2c ausgegeben wird und dem Bindemittel eingearbeitet. Je nach Materialbeschaffenheit des zweiten elastomeren Materials weisen diese Bereiche 6a, 6b eine höhere oder geringere Nachgiebigkeit als der Grundkörper auf.

Die Bereiche 6a, 6b können unterschiedliche Größen und Geometrien aufweisen. Im vorliegenden Fall ist in den linken Rand des Grundkörpers eine lineare Anordnung von konischen Bereichen 6a eingearbeitet. Auf der rechten Seite des Grundkörpers sind schichtförmige Bereiche 6b in Abstand übereinander angeordnet vorgesehen.

Generell können mit dem 3D-Drucker 2 frei wählbare Bereiche 6a, 6b unterschiedlicher Elastizität mit Hohlräumen 5a, 5b kombiniert werden, um so die ortsabhängige Variation der Elastizität exakt an die Bedürfnisse der jeweiligen Person anpassen zu können.

### Bezugszeichenliste

- (1): Rechnereinheit
- (2): 3D-Drucker
- (2a, 2b 2c): Sprühmittel
- (3): Matratze
- (5a, 5b): Hohlraum
- (6a, 6b): Bereich

## Patentansprüche

1. Verfahren zur Herstellung eines körperstützenden Elements in Form einer Matratze umfassend folgende Verfahrensschritte
• Vorgabe von Druckdaten, welche eine personenspezifische dreidimensionale Stützstruktur bilden, wobei die Druckdaten von dreidimensionalen Geometriedaten mit ortsabhängigen Sollwerten für die Elastizität des herzustellenden körperstützenden Elements gebildet sind.
• Herstellung des körperstützenden Elements anhand der Druckdaten mittels eines 3D-Druckers (2).

2. Verfahren nach Anspruch 1, **dadurch gekennzeichnet, dass** mittels des 3D-Druckers (2) in Abhängigkeit der Druckdaten Bereiche (6a, 6b) unterschiedlicher Elastizität des körperstützenden Elements durch die Bildung von Hohlräumen (5a, 5b) unterschiedlicher Größen und/oder unterschiedlicher Anzahl erzeugt werden.

3. Verfahren nach einem der Ansprüche 1 oder 2, **dadurch gekennzeichnet, dass** mittels des 3D-Druckers (2) in Abhängigkeit der Druckdaten Bereiche (6a, 6b) unterschiedlicher Elastizität des körperstützenden Elements durch die Verwendung unterschiedlicher Druckmaterialien erzeugt werden.

4. Verfahren nach einem der Ansprüche 1 bis 3, **dadurch gekennzeichnet, dass** zur Herstellung des körperstützenden Elements elastische Materialien verwendet werden, die bei dem mittels des 3D-Druckers (2) durchgeführten Druckprozess mit einem Bindemittel vermischt werden.

5. Verfahren nach Anspruch 4, **dadurch gekennzeichnet, dass** als elastische Materialien elastomere Materialien, insbesondere Kunststoffe, verwendet werden.

6. Verfahren nach Anspruch 5, **dadurch gekennzeichnet, dass** der 3D-Drucker (2) Sprühmittel (2a, 2b, 2c) aufweist, wobei aus ersten Sprühmitteln 2a elastische Materialien gesprüht werden und aus zweiten Sprühmitteln 2b Bindemittel gesprüht werden.

7. Verfahren nach Anspruch 6, **dadurch gekennzeichnet, dass** die elastischen Materialien in Pulverform vorliegen.

8. Verfahren nach einem der Ansprüche 6 oder 7, **dadurch gekennzeichnet, dass** das Bindemittel in flüssiger Form vorliegt.

9. Verfahren nach einem der Ansprüche 4 bis 8, **dadurch gekennzeichnet, dass** mit dem 3D-Drucker (2) simultan Materialstrukturen des körperstützenden Elements aus unterschiedlichen elastomeren Materialien gebildet werden.

## Claims

1. A method for producing a body-supporting element in the form of a mattress comprising the following steps
• Specification of print data, which form a person-specific three-dimensional support structure, wherein the print data of three-dimensional geometry data with location-dependent set values for the elasticity of the body-supporting element to be produced are formed.
• Production of the body-supporting element on the basis of the print data by means of a 3D printer (2).

2. The method according to claim 1, **characterised in that** by means of the SD printer (2) in dependence of the pressure data, regions (6a, 6b) of different elasticity of the body-supporting element are generated by the formation of cavities (5a, 5b) of different sizes and/or different numbers.

3. The method according to one of claims 1 or 2, **characterised in that** by means of the 3 D printer (2) depending on the print data, regions (6a, 6b) of different elasticity of the body-supporting element are generated by the use of different printing materials.

4. The method according to one of claims 1 to 3, **characterised in that** for the production of the body-supporting element, elastic materials are used, which are mixed in the by means of the printing process performed using a 3 D-printer (2) with a binder.

5. The method according to claim 4, **characterised in that** elastomeric materials, in particular plastics, are used as elastic materials.

6. The method according to claim 5, **characterised in that** the SD printer (2) contains spraying means (2a, 2b, 2c), wherein elastic materials are sprayed from first spraying means 2a and that binders are sprayed from second spraying means 2b.

7. A method according to claim 6, **characterised in that** the elastic materials are in powder form.

8. The method according to one of claims 6 or 7, **characterised in that** the binder is in liquid form.

9. The method according to one of claims 4 to 8, **characterised in that** material structures of the body-supporting element are formed from different elastomeric materials, together with the 3D printer (2).

## Revendications

1. Procédé de fabrication d'un élément de support corporel sous la forme d'un matelas comprenant les étapes suivantes
• Spécification de données d'impression, qui forment une structure de support tridimensionnelle spécifique à une personne, dans laquelle sont formées les données d'impression de données géométriques tridimensionnelles avec des valeurs définies dépendantes de l'emplacement pour l'élasticité de l'élément de support corporel à produire.
• Production de l'élément de support corporel à partir des données d'impression à l'aide d'une imprimante 3D (2).

2. Procédé selon la revendication 1, **caractérisé en ce que**, au moyen de l'imprimante SD (2) en fonction des données de pression, des régions (6a, 6b) d'élasticité différente de l'élément de support corporel sont générées par la formation de cavités (5a, 5b) de différentes tailles et/ou de nombres différents.

3. Procédé selon l'une des revendications 1 ou 2, **caractérisé en ce que**, au moyen de l'imprimante 3D (2), en fonction des données d'impression, des régions (6a, 6b) d'élasticité différente de l'élément de support corporel sont générées par l'utilisation de différents matériaux d'impression.

4. Procédé selon l'une des revendications 1 à 3, **caractérisé en ce que** pour la fabrication de l'élément de support corporel, on utilise des matériaux élastiques qui sont mélangés au moyen du processus d'impression réalisé à l'aide d'une imprimante 3D (2) avec un liant.

5. Procédé selon la revendication 4, **caractérisé en ce que** des matériaux élastomères, en particulier des matières plastiques, sont utilisés comme matériaux élastiques.

6. Procédé selon la revendication 5, **caractérisé en ce que** l'imprimante SD (2) contient des moyens de pulvérisation (2a, 2b, 2c), dans lequel les matériaux élastiques sont pulvérisés à partir de premiers moyens de pulvérisation 2a et que les liants sont pulvérisés à partir de seconds moyens de pulvérisation 2b.

7. Procédé selon la revendication 6, **caractérisé en ce que** les matériaux élastiques sont sous forme de poudre.

8. Procédé selon l'une des revendications 6 ou 7, **caractérisé en ce que** le liant est sous forme liquide.

9. Procédé selon l'une des revendications 4 à 8, **caractérisé en ce que** les structures de matériau de l'élément de support corporel sont formées à partir de matériaux élastomères différents, conjointement avec l'imprimante 3D (2).
